# EUROPÄISCHE PATENTSCHRIFT

(11) **EP 1 249 371 B1**
(45) Veröffentlichungstag und Bekanntmachung des Hinweises auf die Patenterteilung: **21.07.2004**
(21) Anmeldenummer: 02006989.4
(22) Anmeldetag: 27.03.2002
(51) Int. Cl.: B60R 16/02

(54) **Verfahren zum Erkennen von Überrollvorgängen bei einem Kraftfahrzeug**
Method for detecting roll-over events in a vehicle
Méthode pour reconnaître des phénomènes de retournement dans un véhicule

(30) Priorität: 11.04.2001 DE 10118062
(43) Veröffentlichungstag der Anmeldung: 16.10.2002
(73) Patentinhaber: ROBERT BOSCH GMBH, 70442 Stuttgart (DE)
(72) Erfinder: Mattes, Bernhard, 74343 Sachsenheim (DE); Schmitt, Hans-Walter, 71287 Weissach (DE)

(56) Entgegenhaltungen:
- EP-A- 0 965 502
- DE-A- 19 828 338
- US-A- 6 002 975

## Beschreibung

### Stand der Technik

Die Erfindung betrifft ein Verfahren zum Erkennen von Überrollvorgängen bei einem Kraftfahrzeug und Auslösen von entsprechenden Rückhaltemitteln, wobei die Drehrate des Fahrzeugs um mindestens eine Drehachse, insbesondere seine Längsachse und/oder seine Querachse, mit Hilfe mindestens eines Drehratensensors erfasst wird und ausgewertet wird.

In der Praxis werden bevorzugt mikromechanische bzw. oberflächenmikromechanische Sensoren als Drehratensensoren eingesetzt, deren Funktionsweise auf dem Stimmgabelprinzip bzw. auf einem Linear- oder Rotationsschwingerprinzip beruht.

Bei Drehratensensoren, deren Funktionsweise auf dem Rotationsschwingerprinzip beruht, wird die Coriolisbeschleunigung erfasst, die aufgrund einer Drehbewegung des Fahrzeugs auf die Sensormasse wirkt. Der nachfolgende Vergleich zwischen einer Messung der Translationsbeschleunigung und einer Messung der Coriolisbeschleunigung mit oberflächenmikromechanischen Sensoren, deren Sensormasse jeweils 2•10⁻⁶ Gramm beträgt, zeigt, dass es sich bei der Coriolisbeschleunigung um einen relativ kleinen physikalischen Effekt handelt.

Bei einer Translationsbeschleunigung von 3g - was der Auflösungsgrenze eines 8 Bit-Analog-Digital-Wandlers entspricht - liegt die auf die Sensormasse des Beschleunigungssensors wirkende Kraft bei etwa 60•10⁻¹⁰ Newton. Im Vergleich dazu beträgt die auf den Rand der Sensormasse wirkende Corioliskraft bei einer Drehbeschleunigung von 3°/s - was ebenfalls der Auflösungsgrenze eines 8 Bit-Analog-Digital-Wandlers entspricht - bei etwa 4•10⁻¹⁰ Newton. Damit ergibt sich für einen auf dem Rotationsschwingerprinzip beruhenden Drehratensensor eine ca. 15mal kleinere minimal zu messende Kraft als bei einem Beschleunigungssensor mit derselben Sensormasse. Derartige Drehratensensoren müssen also für die Messung minimaler Kräfte ausgelegt sein.

Translationsbeschleunigungen, wie sie beispielsweise in Crash-Situationen auftreten, können mechanische Fahrzeugresonanzen verursachen, die die Funktionsweise der voranstehend beschriebenen Drehratensensoren erheblich stören. Insbesondere in Aufprallsituationen kann dadurch der Fall eintreten, dass das Ausgangssignal des Drehratensensors fälschlicherweise eine Überrollsituation anzeigt und deshalb Rückhaltemittel ausgelöst werden, die in der tatsächlich vorliegenden Unfallsituation nicht sinnvoll sind und ggf. sogar ein zusätzliches Verletzungsrisiko für die Fahrzeuginsassen darstellen.

Aus US-6,002,975 A ist eine Überrollerkennung bekannt, bei der ein Drehratensensor verwendet wird und auch Beschleunigungssensoren, so dass der Überrollvorgang in Abhängigkeit von der Drehrate und einer Horizontalbeschleunigung sowie einer Vertikalbeschleunigung bestimmt wird. Aus EP 0 965 502 A2 ist eine gattungsgemäße Überrollbestimmungsmethode bekannt, bei der der Überrollvorgang mittels eines Signals eines Drehratensensors und eines Lateralbeschleunigungssensors bestimmt wird.

### Vorteile der Erfindung

Mit der vorliegenden Erfindung wird vorgeschlagen, die Translationsbeschleunigung des Fahrzeugs bei der Auswertung des Drehratensensorsignals zu berücksichtigen, um zu vermeiden, dass Störungen in der Funktionsweise des Drehratensensors, die durch extreme Translationsbeschleunigungen verursacht worden sind, zum fälschlichen Auslösen von Rückhaltemitteln für einen Überrollvorgang führen.

Erfindungsgemäß ist erkannt worden, dass bei einem Crash, der Störungen des Drehratensensors verursachen kann, in jedem Fall relativ große Translationsbeschleunigungen auftreten, während im Fall eines Überrollvorgangs keine derartig großen Translationsbeschleunigungen auftreten. Es ist ferner erkannt worden, dass im Fall eines Crashs stets Beschleunigungskomponenten in allen drei Hauptachsen des Fahrzeugs auftreten. Zur Realisierung des erfindungsgemäßen Verfahrens genügt deshalb schon das Erfassen von nur einer der Beschleunigungskomponenten, d.h. das Erfassen der Translationsbeschleunigung in nur einer Richtung. Da Airbagsteuergeräte üblicherweise mit Beschleunigungssenso-ren zur Longitudinal- und Lateral-Aufprallerkennung ausgestattet sind, kann das erfindungsgemäße Verfahren in vorteilhafter Weise die vorhandene Hardware nutzen und die Ausgangssignale dieser Beschleunigungssensoren auswerten. Das erfindungsgemäße Verfahren zum Erkennen von Überrollvorgängen kann so auch einfach in das Airbagsteuergerät integriert werden.

Grundsätzlich kann die im Rahmen des erfindungsgemäßen Verfahrens erfasste Translationsbeschleunigung bei der Auswertung der erfassten Drehrate in unterschiedlicher Weise sinnvoll berücksichtigt werden.

Gemäß dem erfindungsgemäßen Verfahren wird anhand der erfassten Translationsbeschleunigung geprüft, ob eine Crash-Situation vorliegt, die die Funktionsfähigkeit des Drehratensensors beeinträchtigt. Dazu kann beispielsweise einfach ein Schwellwert für die Translationsbeschleunigung bestimmt werden. Immer dann, wenn die erfasste Translationsbeschleunigung oberhalb dieses Schwellwerts liegt, wird das Vorliegen einer Crash-Situation angenommen, was wiederum bei der Auswertung der parallel erfassten Drehrate berücksichtigt wird.

In einer besonders vorteilhaften Variante des erfindungsgemäßen Verfahrens wird das Ausgangssignal des Drehratensensors, d.h. die erfasste Drehrate, zumindest für ein vorgegebenes Zeitintervall ignoriert, wenn aufgrund der erfassten Translationsbeschleunigung vom Vorliegen einer Crash-Situation ausgegangen wird, wenn also beispielsweise die gleichzeitig erfasste Translationsbeschleunigung des Fahrzeugs oberhalb eines vorgegebenen Schwellwerts liegt. Da bei Überrollvorgängen in der Regel keine hohen Translationsbeschleunigungen auftreten, wird die Möglichkeit eines Überrollvorgangs hier einfach von vornherein, unabhängig vom Ausgangssignal des Drehratensensors ausgeschlossen. Auf diese Weise kann eine Fehlauslösung von für die tatsächliche Situation ungeeigneten Rückhaltemitteln zuverlässig vermieden werden.

### Zeichnung

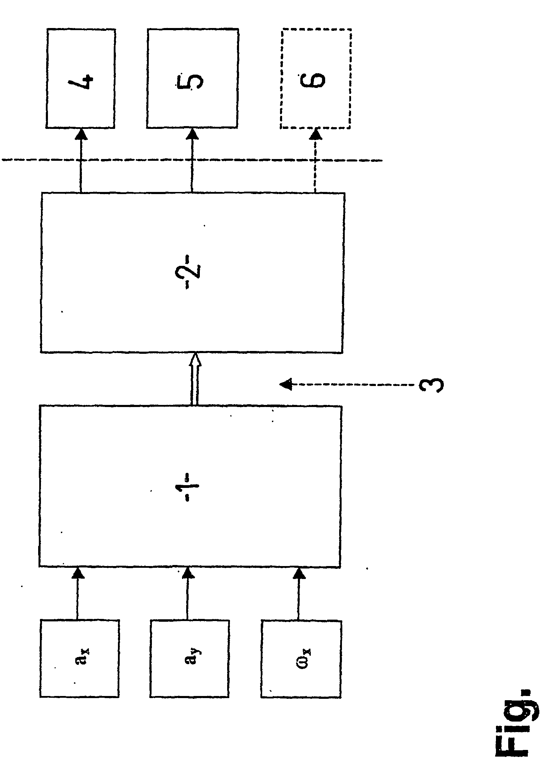

Wie bereits voranstehend ausführlich erörtert, gibt es verschiedene Möglichkeiten, die Lehre der vorliegenden Erfindung in vorteilhafter Weise auszugestalten und weiterzubilden. Dazu wird einerseits auf die dem Patentanspruch 1 nachgeordneten Patentansprüche und andererseits auf die nachfolgende Beschreibung eines Ausführungsbeispiels der Erfindung anhand der Zeichnung verwiesen.

Die einzige Figur zeigt ein Blockschaltbild zur Veranschaulichung des erfindungsgemäßen Verfahrens, das im hier erläuterten Ausführungsbeispiel in ein Airbagsteuergerät integriert ist.

### Beschreibung des Ausführungsbeispiels

Das Airbagsteuergerät umfasst einen Mikroprozessor 1, dem verschiedene Sensorsignale zur Auswertung zugeführt werden. So werden dem Mikroprozessor 1 hier die Ausgangssignale aₓ und a_{y} zweier Beschleunigungssensoren zugeführt, mit denen die Translationsbeschleunigungen des Fahrzeugs parallel zu seiner Längsachse und parallel zu seiner Querachse erfasst werden. Durch Auswertung der Signale aₓ und a_{y} lassen sich Longitudinal- und Lateral-Aufprallsituationen erkennen. Im Fall einer Crash-Situation wird ein entsprechender Algorithmus zum Auslösen geeigneter Rückhaltemittel gestartet, die dann mit Hilfe eines Endstufen-ASIC 2, der über eine serielle Schnittstelle 3 mit dem Mikroprozessor 1 verbunden ist, angesteuert werden. So werden beispielsweise bei einem Seitenaufprall die Gurtstraffer 4 und die aufprallseitigen Seitenairbags 5 für Thorax und Kopf durch den im Mikroprozessor 1 ablaufenden Seitenaufprallalgorithmus ausgelöst.

Wie bereits erwähnt, ist im hier erläuterten Ausführungsbeispiel das erfindungsgemäße Verfahren zum Erkennen von Überrollvorgängen und Auslösen von entsprechenden Rückhaltemitteln in das Airbagsteuergerät integriert. Zum Erkennen von Überrollvorgängen wird die Drehrate ωₓ des Fahrzeugs um eine Drehachse, hier seine Längsachse, mit Hilfe eines Drehratensensors erfasst und dem Mikroprozessor 1 zugeführt. Erfindungsgemäß wird bei der Auswertung der erfassten Drehrate ωₓ die Translationsbeschleurligung aₓ und/oder a_{y} berücksichtigt. Im vorliegenden Fall werden einfach die schon für die Longitudinal- und Lateral-Aufprallerkennung erfassten Translationsbeschleunigungen aₓ und a_{y} auch bei der Auswertung der Drehrate ωₓ genutzt. Eine gesonderte Erfassung der Translationsbeschleunigungen aₓ und a_{y} nur für das erfindungsgemäße Verfahren ist hier nicht erforderlich.

Anhand der erfassten Translationsbeschleunigungen aₓ und a_{y} wird nun geprüft, ob eine Crash-Situation vorliegt, die die Funktionsfähigkeit des Drehratensensors beeinträchtigen könnte. Dazu werden die erfassten Translationsbeschleunigungen aₓ und a_{y} jeweils mit einem vorgegebenen Schwellwert verglichen. Liegen die Translationsbeschleunigungen aₓ und a_{y} oberhalb der entsprechenden Schwellwerte, so wird angenommen, dass eine Crash-Situation vorliegt. In diesem Fall wird das Ausgangssignal des Drehratensensors, d.h. die erfasste Drehrate ωₓ, zumindest für ein vorgegebenes Zeitintervall ignoriert, auch wenn das Ausgangssignal ωₓ des Drehratensensors eine Überrollsituation signalisiert.

Auch im Fall eines Seitenaufpralls mit anschließendem Rollover räumt das erfindungsgemäße Verfahren dem Seitenaufprallalgorithmus eine höhere Priorität ein als dem Überrollalgorithmus, da der Überrollalgorithmus zum Auslösen entsprechender Rückhaltemittel, wie z.B. des Überrollbügels 6, während des vorgegebenen Zeitintervalls nicht gestartet werden kann. Insgesamt erweist sich diese Priorisierung jedoch als vorteilhaft. Bei einem Seitenaufprall mit anschließendem Rollover werden nämlich ohnehin - durch den Seitenaufprallalgorithmus - die Gurtstraffer 4 und die aufprallseitigen Seitenairbags 5 ausgelöst, die auch im Falle eines entsprechenden Überrollvorgangs ausgelöst würden. Es erweist sich daher als unerheblich, wenn das Ausgangssignal ωₓ des Drehratensensors für eine gewisse Zeit unterdrückt wird. Im Gegensatz dazu kann der Überrollalgorithmus bei einem nicht auslöserelevanten, also nur schwachen Seitenaufprall, der zu einem Überrollvorgang führt, die entsprechenden Rückhaltemittel korrekt auslösen, da das Ausgangssignal ωₓ des Drehratensensors in diesem Fall nicht ignoriert sondern ausgewertet wird. In anderen Crash-Situationen, die die Funktionsweise des Drehratensensors beeinträchtigen, lässt sich durch das Ignorieren der erfassten Drehrate ωₓ einfach und zuverlässig ein Fehlauslösen der Rückhaltemittel für den Überrollvorgang vermeiden.

Abschließend sei angemerkt, dass für die Effizienz des voranstehend beschriebenen erfindungsgemäßen Verfahrens die richtige Wahl der Schwellwerte für die Translationsbeschleunigungen aₓ und a_{y} und die richtige Wahl der Dauer des Ignorierungsintervalls, d.h. des Zeitintervalls, innerhalb dessen das Ausgangssignal ωₓ des Drehratensensors ignoriert wird, wesentlich ist.

## Patentansprüche

1. Verfahren zum Erkennen von Überrollvorgängen bei einem Kraftfahrzeug und Auslösen von entsprechenden Rückhaltemitteln (4, 5, 6), wobei die Drehrate (ωₓ) des Fahrzeugs um mindestens eine Drehachse, insbesondere seine Längsachse und/oder seine Querachse, mit Hilfe mindestens eines Drehratensensors erfasst wird und ausgewertet wird, wobei neben der Drehrate (ωₓ) die Translationsbeschleunigung (aₓ, a_{y}) des Fahrzeugs in mindestens einer Richtung erfasst wird und bei der Auswertung der erfassenden Drehrate (ωₓ) berücksichtigt wird, **dadurch gekennzeichnet, dass** anhand der erfassten Translationsbeschleunigung (aₓ, a_{y}) geprüft wird, ob die Funktionsfähigkeit des Drehratensensors beeinträchtigt wird.

2. Verfahren nach Anspruch 1, **dadurch gekennzeichnet, dass** geprüft wird, ob die erfasste Translationsbeschleunigung (aₓ, a_{y}) oberhalb eines vorgebbaren Schwellwerts für die Beeinträchtigung des Drehratensensors liegt.

3. Verfahren nach einem der Ansprüche 1 oder 2, **dadurch gekennzeichnet, dass** das Ausgangssignal (ωₓ) des Drehratenssensors, d. h. die erfasste Drehrate (ωₓ), zumindest für ein vorgebbares Zeitintervall ignoriert wird, wenn aufgrund der erfassten Translationsbeschleunigung (aₓ, a_{y}) vom Vorliegen der Beeinträchtigung des Drehratensensors ausgegangen wird.

4. Verwendung eines Steuergeräts zum Auslösen von Rückhaltemitteln in einem Kraftfahrzeug, in einem Verfahren zum Erkennen von Überrollvorgängen nach einem der Ansprüche 1 bis 3

## Claims

1. Method for detecting roll-over events in a motor vehicle and triggering of corresponding restraining means (4, 5, 6), the rotational speed (ωₓ) of the vehicle about at least one rotational axis, in particular its longitudinal axis and/or transverse axis, being sensed using at least one rotational speed sensor and evaluated, in which case, in addition to the rotational speed (ωₓ) the translation acceleration (aₓ, a_{y}) of the vehicle is sensed in at least one direction and is taken into account in the evaluation of the sensing rotational speed (ωₓ), **characterized in that** the sensed translation acceleration (aₓ, a_{y}) is used to test whether the operational capability of the rotational speed sensor is adversely affected.

2. Method according to Claim 1, **characterized in that** it is tested whether the sensed translation acceleration (aₓ, a_{y}) lies above a predefinable threshold value for the adverse effect on the rotational speed sensor.

3. Method according to one of Claims 1 and 2, **characterized in that** the output signal (ωₓ) of the rotational speed sensor, i.e. the sensed rotational speed (ωₓ) is ignored at least for a predefinable time interval if the presence of the adverse effect on the rotational speed sensor is assumed on the basis of the sensed translation acceleration (aₓ, a_{y}).

4. Use of a control device for triggering restraining means in a motor vehicle, in a method for detecting roll-over events according to one of Claims 1 to 3.

## Revendications

1. Procédé pour reconnaître des phénomènes de retournement dans un véhicule automobile et pour déclencher des moyens de retenue (4, 5, 6) correspondants, selon lequel le taux de rotation (ωₓ) du véhicule est détecté et est interprété autour d'au moins un axe de rotation, en particulier autour de son axe longitudinal et/ou de son axe transversal, à l'aide d'au moins un capteur de taux de rotation, selon lequel, outre le taux de rotation (ωₓ), on détecte l'accélération en translation (aₓ, a_{y}) du véhicule dans au moins une direction et lors de l'exploitation on prend en compte le taux de rotation (ωₓ) détecté,
**caractérisé en ce que**
à l'aide de l'accélération en translation (aₓ, a_{y}) détectée, on vérifie si le fonctionnement du capteur de taux de rotation est altéré.

2. Procédé selon la revendication 1,
**caractérisé en ce qu'**
on vérifie si l'accélération en translation (aₓ, a_{y}) détectée se trouve au-dessus d'une valeur seuil prédéterminée pour l'altération du capteur de taux de rotation.

3. Procédé selon la revendication 1 ou 2,
**caractérisé en ce que**
le signal de sortie (ωₓ) du capteur de taux de rotation, c'est-à-dire le taux de rotation (ωₓ) détecté, est ignoré au moins pendant un laps de temps prédéterminé lorsque, du fait de l'accélération en translation (aₓ, a_{y}) détectée, on suppose qu'il existe une altération du capteur.

4. Utilisation d'un appareil de commande destiné à déclencher des moyens de retenue dans un véhicule automobile, dans un procédé pour reconnaître des phénomènes de retournement selon l'une des revendications 1 à 3.
